# EUROPÄISCHE PATENTSCHRIFT

(11) **EP 4 230 347 B1**
(45) Veröffentlichungstag und Bekanntmachung des Hinweises auf die Patenterteilung: **09.04.2025**
(21) Anmeldenummer: 22157098.9
(22) Anmeldetag: 16.02.2022
(51) Int. Cl.: B25B 5/00, B62D 65/06, E05C 21/00, B25B 27/00, B62D 65/02, B05B 13/02

(54) **FERTIGUNGSMITTEL UND VERFAHREN FÜR DIE LACKIERUNG EINER KAROSSERIE**
PRODUCTION MEANS AND METHOD FOR PAINTING A VEHICLE BODY
MOYEN D'USINAGE ET PROCÉDÉ DE PEINTURE D'UNE CARROSSERIE

(43) Veröffentlichungstag der Anmeldung: 23.08.2023
(73) Patentinhaber: LMB Kunststofftechnik GmbH, 26789 Leer-Loga (DE)
(72) Erfinder: Abel, Anton, 26789 Leer-Loga (DE)
(74) Vertreter: Eisenführ Speiser

(56) Entgegenhaltungen:
- DE-A1- 102020 105 268
- US-A1- 2010 066 105

## Beschreibung

Die vorliegende Erfindung betrifft ein Fertigungsmittel und ein Verfahren für die Lackierung einer Karosserie, insbesondere einer Kraftfahrzeug-Karosserie, mit einem Rahmen und einer an dem Rahmen montierten Tür.

Fertigungshilfsmittel sind passive Betriebsmittel, die direkt an der Fertigung beteiligt sind. Als Betriebsmittel werden dabei Arbeitsmittel zur Erfüllung einer Aufgabe in einem Arbeitssystem verstanden. Bei Fertigungshilfsmitteln kann sich um einzelne Bauteile oder Baugruppen von miteinander interagierenden Bauteilen handeln. Da sie passiv sind, können sie alleine nicht tätig werden wie aktive Betriebsmittel (Maschinen). Außerdem sind sie direkt an der Fertigung beteiligt, also nicht nur indirekt wie Gebäude oder Transport- oder Lagereinrichtungen.

Als Karosserie wird der komplette Aufbau eines Fahrzeugs auf einem tragenden Fahrgestell verstanden. Bei dem Fahrzeug kann es sich um ein Luft-, Wasser- oder Landfahrzeug handeln.

Bei der Lackierung von Karosserien von Fahrzeugen werden Fertigungshilfsmittel verwendet, um die an dem Fahrzeugrahmen montierte Tür in einem definierten Abstand von zumeist wenigen Millimetern zur Tür zu arretieren. Damit soll das Entstehen einer Lackkante zwischen Tür und Fahrzeugrahmen verhindert werden. Der Lackierprozess umfasst dabei zumeist eine Vielzahl von Verfahrensschritten, welche ein wiederholtes Öffnen und Arretieren der Tür notwendig machen. Die verwendeten Fertigungshilfsmittel müssen daher neben dem Arretieren auch ein anschließendes Öffnen der Fahrzeugtür zulassen.

In der Automobilindustrie werden Fahrzeuge zumeist in Serien bzw. Großserien produziert und Fertigungsprozesse, wie das Lackieren, möglichst automatisiert durchgeführt. Herkömmliche, aus Stahl gefertigte Fertigungshilfsmittel, erfordern aufgrund komplizierter Verriegelungsmechanismen ein manuelles Entriegeln des Fertigungshilfsmittels. Dies steht einer vollautomatischen Fahrzeuglackierung entgegen und führt damit höheren Produktionskosten.

Es sind Fertigungshilfsmittel für die Lackierung von Karosserien bekannt, welche an einer Tür montiert werden und durch Betätigen eines Hebelmechanismus die Tür in einem definierten Abstand zu dem Fahrzeugrahmen an selbigem verriegeln. Derartige Fertigungshilfsmittel sind zumeist aus Stahl gefertigt. Zum Entriegeln der Tür von dem Fahrzeugrahmen ist eine erneute Betätigung des Hebelmechanismus erforderlich. Eine solche Betätigung eines innerhalb der Karosserie befindlichen Hebelmechanismus ist bislang durch Fertigungsroboter nicht realisierbar. Das Fertigungshilfsmittel erfordert ein manuelles Verriegeln mit dem Fahrzeugrahmen durch Betätigen des Hebelmechanismus. Durch das manuelle Entriegeln des Fertigungshilfsmittels werden in der Produktion daher diverse Mitarbeiter benötigt.

Weiterhin lassen sich herkömmliche Fertigungshilfsmittel zumeist nicht zerstörungsfrei von der Karosserie lösen und können somit nicht wiederverwendet werden. Dies steht einer nachhaltigen Produktion entgegen.

Aus der US 2010/066105 A1 ist ein Fertigungshilfsmittel nach dem Oberbegriff von Anspruch 1 bekannt. Ferner ist aus DE 10 2020 105268 A1 ein Fertigungshilfsmittel mit einem ersten Fertigungshilfsteil und einem zweiten Fertigungshilfsteil zum Ausbilden einer lösbaren Schnappverbindung bekannt, durch welches eine Fahrzeugtür relativ zu einem Fahrzeugrahmen arretiert werden kann.

Es ist daher Aufgabe der vorliegenden Erfindung, ein Fertigungshilfsmittel anzugeben, welches zumindest einen der aus dem Stand der Technik bekannten Nachteile überwindet. Insbesondere war Aufgabe der vorliegenden Erfindung, ein Fertigungshilfsmittel anzugeben, welches eine vollautomatisierte Lackierung einer Karosserie durch ein vereinfachtes Arretieren und anschließendes Öffnen Tür ermöglicht.

Die Erfindung löst die zugrundeliegende Aufgabe in einem ersten Aspekt durch ein Fertigungshilfsmittel nach Anspruch 1. Insbesondere schlägt die Erfindung vor, dass das Fertigungshilfsmittel ein erstes Fertigungshilfsteil zur lösbaren Kopplung mit dem Rahmen und ein zweites Fertigungshilfsteil zur lösbaren Kopplung mit der Tür umfasst. Das erste Fertigungshilfsteil und das zweite Fertigungshilfsteil sind dazu eingerichtet, mittels einer Schnappverbindung lösbar miteinander in Eingriff gebracht zu werden und in einem montierten Zustand, in welchem das erste Fertigungshilfsteil mit dem Rahmen und das zweite Fertigungshilfsteil mit der Tür gekoppelt ist, die Tür beabstandet zu dem Rahmen zu arretieren. Bei einem solchen Abstand handelt es sich bevorzugt um einen Abstand von 6 bis 8 mm.

Als Schnappverbindungen werden im Sinne der Erfindung Verbindungen aus Funktionselementen zum lösbaren und unlösbaren, einfachen formschlüssigen Fügen von Bauteilen verstanden. Dabei verformt sich ein Funktionselement elastisch und verhakt anschließend lösbar oder unlösbar mit dem zweiten Funktionselement. Es liegt also ein Formschluss vor.

Im Lackierprozess verbleibt das erste Fertigungshilfsteil somit an dem Rahmen und das zweite Fertigungshilfsteil verbleibt an der Tür. Im Anschluss an den Lackierprozess bzw. einen ersten Lackierzyklus lassen sich das erste Fertigungshilfsteil und das zweite Fertigungshilfsteil durch die jeweils lösbare Kopplung mit dem Rahmen bzw. der Tür zerstörungsfrei wieder lösen. Somit lässt sich das erfindungsgemäße Fertigungshilfsmittel mehrfach verwenden. Weiterhin lässt sich das erste Fertigungshilfsteil wiederholbar mit dem zweiten Fertigungshilfsteil durch Ausbilden der Schnappverbindung in Eingriff bringen. Wie vorstehend beschrieben, muss sich dabei jeweils ein Abschnitt entweder des ersten Fertigungshilfsteils oder des zweiten Fertigungshilfsteils elastisch verformen, um mit dem jeweils anderen Fertigungshilfsteil formschlüssig in Eingriff zu kommen. Für diese elastische Verformung ist somit lediglich das Aufbringen einer Kraft erforderlich. Diese Kraft kann beispielsweise durch eine Schließbewegung der Tür mittels eines Fertigungsroboters automatisiert erfolgen. In entsprechender Weise ist zum Außereingriffbringen des ersten Fertigungshilfsteils von dem zweiten Fertigungshilfsteil ebenfalls lediglich das Aufbringen einer entgegengerichteten Kraft erforderlich. Somit kann das wiederholte Arretieren und Öffnen der Tür bei der Lackierung einer Karosserie vollautomatisiert durch einen Fertigungsroboter erfolgen.

Die Kraft zum Öffnen der Tür beträgt insbesondere 60 - 100 N, besonders bevorzugt im Wesentlichen 75 - 85 N.

Vorzugsweise ist die Schnappverbindung derart ausgebildet, dass eine auf die Tür wirkende Kraft von 60 - 100 N, bevorzugt im 75 - 85 N, die von dem Rahmen weggerichtet ist, die Schnappverbindung löst bzw. Weiter bevorzugt ist die Schnappverbindung derart ausgebildet, dass eine auf die Tür wirkende Kraft von 60 - 100 N, bevorzugt im 75 - 85 N, die von in Richtung des Rahmens gerichtet ist, die Schnappverbindung eine elastische Verformung zum Ausbilden der Schnappverbindung bewirkt.

Vorzugsweise umfasst das erste Fertigungshilfsteil eine formschlüssig mit dem Rahmen in Eingriff bringbare Aufnahme und ein relativ zu der Aufnahme bewegbares Rastelement. Das Rastelement ist bevorzugt dazu eingerichtet, formschlüssig in eine korrespondierende Montage-Schnittstelle des Rahmens einzugreifen. Dabei bildet das Rastelement insbesondere eine Schnappverbindung mit der korrespondierenden Montage-Schnittstelle des Rahmens aus. Vorzugsweise ist die Bewegung des Rastelements relativ zu der Aufnahme eine Schwenkbewegung. Zum formschlüssigen Ineingriffbringen mit dem Rahmen nimmt die Aufnahme insbesondere zumindest einen Abschnitt des Rahmens auf. Vorzugsweise handelt es sich bei dem Abschnitt des Rahmens um einen Keder in einer Fahrzeugsäule, insbesondere der B- oder C-Säule. Somit wird auf einfache Weise der Fahrzeugrahmen zur Kopplung des ersten Fertigungshilfsteils durch Ausbilden einer formschlüssigen Verbindung genutzt. Die Aufnahme bietet dabei eine zusätzliche Möglichkeit zur Lasteinleitung in den Fahrzeugrahmen, sodass das Rastelement entlastet wird. Das Rastelement bietet dabei eine zusätzliche Sicherung gegen ein ungewolltes Entkoppeln des ersten Fertigungshilfsteils durch das formschlüssige Eingreifen in eine Montage-Schnittstelle des Rahmens. Somit wird das erste Fertigungshilfsteil zuverlässig und reversibel lösbar an dem Rahmen montiert und ist mehrfach verwendbar.

Vorzugsweise ist die Aufnahme durch eine Linearbewegung in einer Längsrichtung mit dem Rahmen in Eingriff bringbar und dazu eingerichtet, Kräfte orthogonal zur Längsrichtung aufzunehmen. Somit ist die Aufnahme auf einfache Weise mit dem Rahmen in Eingriff bringbar und nimmt Kräfte in einer Raumrichtung auf.

Weiter bevorzugt ist das Rastelement durch eine Bewegung relativ zu der Aufnahme, welche zumindest eine Bewegungskomponente orthogonal zur Längsrichtung L aufweist, mit der Montage-Schnittstelle des Rahmens in Eingriff bringbar. Somit führt eine elastische Verformung des ersten Fertigungshilfsteils zur Ausbildung einer Schnappverbindung zwischen dem Rastelement und der Montage-Schnittstelle des Rahmens. Dadurch, dass das Rastelement dazu eine Bewegung relativ zu der Aufnahme ausführt, welche zumindest eine Bewegungskomponente orthogonal zur Längsrichtung aufweist, kann das Rastelement ferner Kräfte in Längsrichtung aufnehmen und somit die mit dem Rahmen in Eingriff stehende Aufnahme arretieren. Vorzugsweise ist das Rastelement durch eine Kombination einer Linearbewegung orthogonal zur Längsrichtung und einer Schwenkbewegung in Richtung der Aufnahme bzw. entgegengesetzt der Aufnahme mit der Montage-Schnittstelle in Eingriff bringbar.

Vorzugsweise ist die Montage-Schnittstelle als eine Ausnehmung und/oder eine Hinterschneidung des Rahmens ausgebildet. Hinterschneidungen und Ausnehmungen sind zumeist am Rahmen vorhanden und müssen nicht eigens eingebracht werden. Somit bedarf es keiner besonderen Anpassung des Rahmens.

Weiter bevorzugt ist das Rastelement innerhalb der Ausnehmung von einer bzw. der Rastposition, in welcher das Rastelement formschlüssig mit der Aufnahme in Eingriff ist, in eine Löseposition verschwenkbar, in welcher das Rastelement aus der Aufnahme heraus bewegbar ist. In gleicher Weise kann das Rastelement von einer bzw. der Rastposition in eine Löseposition verschwenkbar sein, in welcher das Rastelement relativ zu der Hinterschneidung bewegbar ist.

Es ist bevorzugt, dass das Rastelement dazu eingerichtet ist, in der Rastposition Kräfte orthogonal zur Längsrichtung aufzunehmen, derart, dass die im montierten Zustand mit dem Rahmen in Eingriff stehende Aufnahme arretiert wird. Somit kann ein unbeabsichtigtes Lösen der Aufnahme von dem Rahmen, beispielsweise durch eine Bewegung in Längsrichtung, verhindert werden.

Gemäß einer bevorzugten Ausführungsform weist das erste Fertigungshilfsteil einen Hebelmechanismus auf, der einen mit dem Rastelement gekoppelten Hebel umfasst. Vorzugsweise ist das Rastelement durch Aufbringen einer Kraft, insbesondere einer Lösekraft auf den Hebel von der Rastposition in eine bzw. die Löseposition bringbar, wobei die Lösekraft zumindest eine Komponente entgegengesetzt in Längsrichtung aufweist. Somit wird ein Mechanismus zum reversiblen Lösen des Rastelements und damit des ersten Fertigungshilfsteils insgesamt bereitgestellt.

Vorzugsweise weist das erste Fertigungshilfsteil eine Durchschlagsicherung auf, welche dazu eingerichtet ist, im montierten Zustand von dem Rahmen in Richtung der Tür in einem Sicherungsabstand vorzustehen. Die Durchschlagsicherung weist bevorzugt eine solche Steifigkeit und Festigkeit auf, dass sie die Tür gegenüber einem unbeabsichtigten Schließen sichern kann. Somit wird im Prozess zuverlässig verhindert, dass die Tür unbeabsichtigter Weise geschlossen wird und den Rahmen berührt. In diesem Fall würden Schäden am Rahmen bzw. an der Tür entstehen. Im Prozess ist die Tür in etwa 6 - 8 mm geöffnet und wird in dieser Position durch das Fertigungshilfsmittel arretiert. Wird unbeabsichtigt eine Kraft auf die Tür aufgebracht, führt dies zu einer Belastung der Schnappverbindung zwischen dem ersten Fertigungshilfsteil und dem zweiten Fertigungshilfsteil. Das mit dem Rahmen gekoppelte erste Fertigungshilfsteil stellt in diesem Fall durch die Durchschlagsicherung sicher, dass die Tür maximal so weit geschlossen werden kann, bis sie auf die Durchschlagsicherung trifft. Somit wird ein definiertes Öffnungsmaß unabhängig von der Schnappverbindung und einem etwaigen Lösen oder einer Beschädigung derselbigen aufrechterhalten.

Vorzugsweise liegt der Sicherungsabstand dabei in einem Bereich von 1,5 mm bis 6,5 mm, besonders bevorzugt in einem Bereich von 2 mm bis 6 mm. Somit wird ein ausreichender Sicherungsabstand bereitgestellt, sodass die Tür auch unter Berücksichtigung etwaiger Fertigungstoleranzen an einem unbeabsichtigten Schließen gehindert wird. Gleichzeitig steht die Durchschlagsicherung in Richtung der Tür nicht zu weit vor, sodass Beschädigungen am Fahrzeug entstehen könnten oder das Ausbilden der Schnappverbindung zwischen dem ersten Fertigungshilfsteil und dem zweiten Fertigungshilfsteil beeinträchtigt wird.

Vorzugsweise weist das erste Fertigungshilfsteil mindestens eine zwischen der Durchschlagsicherung und der Aufnahme angeordnete Verstärkungsrippe auf, welche dazu eingerichtet ist, die in die Durchschlagsicherung eingeleiteten Kräfte im montierten Zustand über die Aufnahme in den Rahmen abzuleiten. Somit wird eine Beschädigung des Fertigungshilfsmittels und insbesondere des ersten Fertigungshilfsteils verhindert.

Weiter bevorzugt weist das erste Fertigungshilfsteil im Bereich der Aufnahme und/oder benachbart zu dem Rastelement mindestens ein in montiertem Zustand in Richtung des Rahmens vorstehendes Positionierteil auf, welches dazu eingerichtet ist, einen Punkt- und/oder Linienkontakt mit dem Rahmen einzugehen. Somit werden etwaige Kontaktflächen des ersten Fertigungshilfsteils in diesem Bereich beabstandet zu dem Rahmen gehalten. Durch die Ausbildung von Linien- bzw. Punktkontakten in diesem Bereich werden etwaige Fertigungstoleranzen berücksichtigt und der Kontakt zwischen dem ersten Fertigungshilfsteil und dem Rahmen minimiert. Somit werden Schäden am Rahmen, beispielsweise aufgrund von Fertigungstoleranzen, vermieden.

Weiter bevorzugt weist das erste Fertigungshilfsteil mindestens ein benachbart zu dem Rastelement angeordnetes Begrenzungselement auf, welches dazu eingerichtet ist, die Bewegung des Rastelements orthogonal zur Längsrichtung zu begrenzen. Somit werden Schäden am ersten Fertigungshilfsteil sowie am Rahmen vermieden, da das Fertigungshilfsteil insbesondere durch eine Bewegung orthogonal zur Längsrichtung, nicht zu weit in Richtung des Rahmens bzw. der Tür bewegt werden kann.

Gemäß einer bevorzugten Ausführungsform weist das erste Fertigungshilfsteil eine Schnapp-Aufnahme und das zweite Fertigungshilfsteil einen Kopplungsabschnitt zum Ausbilden der Schnappverbindung auf. Weiter bevorzugt ist die Schnapp-Aufnahme dazu eingerichtet, sich reversibel elastisch zu verformen, um den Kopplungsabschnitt aufzunehmen. Somit wird der Kopplungsabschnitt an dem zweiten Fertigungshilfsteil und damit an der Tür bereitgestellt, welche zum Ausbilden der Schnappverbindung in Richtung des Fahrzeugrahmens bewegt wird. Durch diese Schließbewegung kommt der Kopplungsabschnitt mit der Schnapp-Aufnahme in Kontakt und überträgt Kräfte, welche ein reversibel elastisches Verformen der Schnapp-Aufnahme bewirken, infolgedessen die Schnapp-Aufnahme den Kopplungsabschnitt aufnimmt. Die Schnapp-Aufnahme ist bevorzugt in Richtung der Tür geöffnet.

Vorzugsweise weist das erste Fertigungshilfsteil einen mit der Schnapp-Aufnahme verbundenen Einführabschnitt auf. Weiter bevorzugt ist der Kopplungsabschnitt dazu eingerichtet, eine Kraft auf den Einführabschnitt auszuüben, um die Schnapp-Aufnahme reversibel elastisch zu verformen. Somit wird die Krafteinleitung in die Schnapp-Aufnahme durch die Bereitstellung eines Einführabschnitts erleichtert und insbesondere Fertigungstoleranzen berücksichtigt, welche zu Toleranzen hinsichtlich der Anordnung des ersten Fertigungshilfsteils relativ zu dem zweiten Fertigungshilfsteil führen.

Erfindungsgemäß umfasst das zweite Fertigungshilfsteil ein erstes Montageteil, welches dazu eingerichtet ist, formschlüssig mit der Tür in Eingriff gebracht zu werden und/oder ein zweites Montageteil, welches dazu eingerichtet ist, eine Schnappverbindung mit der Tür auszubilden. Durch die Ausbildung eines Formschlusses kann das zweite Fertigungshilfsteil sicher an der Tür montiert werden und anschließend wieder gelöst werden. Weiterhin ermöglicht ein zweites Montageteil zum Ausbilden einer Schnappverbindung ein schnelles Koppeln des zweiten Fertigungshilfsteils mit der Tür. Besonders bevorzugt ist dabei die Kombination eines ersten Montageteils zum Ausbilden einer formschlüssigen Verbindung mit der Tür und ein zweites Montageteil zum Ausbilden einer Schnappverbindung mit der Tür.

Vorzugsweise arretiert das zweite Montageteil durch Ausbildung einer Schnappverbindung mit der Tür dabei das erste Montageteil in einer Position, in welcher das erste Montageteil formschlüssig mit der Tür in Eingriff ist. Somit kann die wesentliche Krafteinleitung bevorzugt durch die formschlüssige Verbindung mit dem ersten Montageteil erfolgen und in Ergänzung dazu bzw. im Wesentlichen zum Arretieren des ersten Montageteils ein zweites Montageteil bereitgestellt werden.

Gemäß einer besonders bevorzugten Ausführungsform ist das erste Montageteil in eine Öffnung der Tür einbringbar und durch eine Rotation um eine Drehachse in eine Verriegelungsstellung bringbar, in welcher das erste Montageteil formschlüssig mit der Öffnung in Eingriff bringbar ist.

Es ist weiter bevorzugt, dass das zweite Fertigungshilfsteil elastisch verformbar ist, derart, dass das zweite Montageteil für den Fall, dass das erste Montageteil mit der Öffnung in Eingriff ist, durch Ausbilden einer Schnappverbindung mit der Tür in Eingriff bringbar ist. Somit arretiert die Schnappverbindung des zweiten Montageteils das erste Montageteil in seiner Verriegelungsstellung. Als Öffnungen können dabei beispielsweise ovale Löcher dienen, wobei das erste Montageteil Abmaße aufweist, welche es in einer Löseposition erlauben, in die Öffnung eingebracht zu werden und in der Verriegelungsstellung verhindern, aus der Öffnung herausbewegt zu werden. Ferner wird die Montagesicherheit erhöht, da die Schnappverbindung nur in dem Fall ausgebildet werden kann, dass das erste Montageteil formschlüssig mit der Tür in Eingriff in der Verriegelungsstellung ist.

Vorzugsweise weist das zweite Fertigungshilfsteil mindestens einen Montageabschnitt auf und ist dazu eingerichtet, sich durch Aufbringen einer Kraft, insbesondere einer Lösekraft, auf den Montageabschnitt reversibel elastisch zu verformen, um das zweite Montageteil und die Tür außer Eingriff zu bringen. Bevorzugt ist ein solcher Montageabschnitt beispielsweise durch Verstärkungsrippen verstärkt, um eine Beschädigung des Fertigungshilfsmittels beim Aufbringen der Kraft zu verhindern. Besonders bevorzugt sind dabei zwei im montierten Zustand in vertikaler Richtung beabstandete Montageabschnitte vorgesehen, sodass in Abhängigkeit von der Anordnung der Karosserie relativ zu einem Bediener entweder der erste Montageabschnitt oder der zweite Montageabschnitt genutzt werden kann und eine ergonomisch optimierte Nutzung des Fertigungshilfsmittels ermöglicht.

Erfindungsgemäß ist ein bzw. der Kopplungsabschnitt des zweiten Fertigungshilfsteils in einem Abstand zu dem ersten Montageteil und/oder dem zweiten Montageteil angeordnet, derart, dass der Kopplungsabschnitt im montierten Zustand zu dem Rahmen und der Tür beabstandet ist. Beim Lackieren der Karosserie gelangt Lack auf das Fertigungshilfsmittel. Beim Lösen der Schnappverbindung zwischen dem ersten Fertigungshilfsteil und dem zweiten Fertigungshilfsteil reißt der Lack zwischen den beiden Bauteilen und bricht gegebenenfalls ab. Dieser abbrechende Lack fällt herunter und gelangt durch den Abstand des Kopplungsabschnitts und damit der Schnappverbindung zu dem ersten Montageteil und/oder dem zweiten Montageteil auf den innenliegenden Fahrzeugboden, auf welchen insbesondere Teppiche oder andere Teile des Interieurs platziert werden.

Erfindungsgemäß ist der Kopplungsbereich in einem Abstand von 50 mm bis 80 mm beabstandet zu dem ersten Montageteil und/oder dem zweiten Montageteil angeordnet. Somit wird ein ausreichender Abstand bereitgestellt, um Schäden an der Karosserie, beispielsweise dem Schweller oder dem Keder, zu verhindern. Gleichzeitig wird ein wirtschaftliches Bauteil bereitgestellt, da auf unnötigen Materialeinsatz verzichtet wird.

Weiter bevorzugt weist das zweite Fertigungshilfsteil ein im montierten Zustand unterhalb des Kopplungsabschnitts angeordnetes Ablenkelement auf, welches dazu eingerichtet ist, vom Kopplungsabschnitt und/oder der Schnapp-Aufnahme herabfallende Lackreste aufzunehmen und von der Tür und/oder dem Rahmen wegzuleiten. Somit wird sichergestellt, dass herabfallende Lackreste im Bereich der Schnappverbindung zwischen dem ersten Fertigungshilfsteil und dem zweiten Fertigungshilfsteil nicht auf den Fahrzeugrahmen und insbesondere den Schweller treffen und beschädigen.

Gemäß einer bevorzugten Ausführungsform umfasst das Fertigungshilfsmittel ein thermoplastisches Polymer, vorzugsweise ein glasfaserverstärktes Polymer, insbesondere Polyamid 6 mit einem Glasfaseranteil von 20 % bis 40 %, besonders bevorzugt mit einem Glasfaseranteil von 30 %. Weiter bevorzugt ist das Fertigungshilfsmittel durch einen Spritzgussprozess hergestellt. Durch die entsprechende Materialzusammensetzung wird ein ausreichend temperaturbeständiges Material im Hinblick auf den Lackierprozess bereitgestellt. Gleichzeitig sind thermoplastische Polymere spritzgussfähig. Im Spritzgussprozess können komplexe Bauteile in einem einzigen Fertigungsschritt hergestellt werden. Die Fertigungskosten für das Fertigungshilfsmittel sind somit verglichen mit Fertigungshilfsmitteln aus Stahl reduziert. Durch den Einsatz von Glasfasern wird ferner die Festigkeit und Steifigkeit des Fertigungshilfsmittels erhöht und eine ausreichende Temperaturbeständigkeit sichergestellt.

Die Erfindung wurde vorstehend in einem ersten Aspekt in Bezug auf ein Fertigungshilfsmittel beschrieben. Die Erfindung löst die eingangs genannte Aufgabe in einem zweiten Aspekt durch ein Verfahren zum lösbaren Arretieren einer Tür an einem Rahmen einer Karosserie, insbesondere einer Kraftfahrzeug-Karosserie. Das Verfahren umfasst die Schritte: Bereitstellen eines Fertigungshilfsmittels gemäß dem ersten Aspekt der Erfindung, lösbares Koppeln des zweiten Fertigungshilfsteils mit der Tür, Bewegen der Tür in Richtung einer geschlossenen Position der Tür, wobei das erste Fertigungshilfsteil und das zweite Fertigungshilfsteil mittels einer Schnappverbindung lösbar miteinander in Eingriff gebracht werden, und Arretieren der Tür beabstandet zu dem Rahmen durch das Fertigungshilfsmittel. Bevorzugt wird die Tür in einem Abstand von 6 mm bis 8 mm arretiert. Durch die Bereitstellung eines Fertigungshilfsmittels mit einem ersten und einem zweiten Fertigungshilfsteil, welche zum einen mit der Tür und zum anderen mit dem Rahmen gekoppelt sind und eine Schnappverbindung ausbilden, macht sich das Verfahren die in Bezug auf den ersten Aspekt der Erfindung beschriebenen Vorteile zu eigen. Bevorzugte Ausführungsbeispiele und Vorteile des ersten Aspekts der Erfindung sind ebenso bevorzugte Ausführungsbeispiele und Vorteile in Bezug auf den zweiten Aspekt der Erfindung und umgekehrt.

Vorzugsweise umfasst das Verfahren ferner die Schritte: Bewegen der Tür in Richtung einer geöffneten Position der Tür, wobei das erste Fertigungshilfsteil und das zweite Fertigungshilfsteil außer Eingriff gebracht werden, elastisches Verformen des ersten Fertigungshilfsteils durch das Aufbringen einer ersten Kraft, insbesondere Lösekraft zum Entkoppeln des ersten Fertigungshilfsteils und des Rahmens, und elastisches Verformen des zweiten Fertigungshilfsteils durch Aufbringen einer zweiten Kraft, insbesondere Lösekraft und anschließendes Rotieren des zweiten Fertigungshilfsteils um eine Drehachse zum Entkoppeln des zweiten Fertigungshilfsteils mit der Tür. Somit kann durch das erfindungsgemäße Verfahren das Fertigungshilfsmittel zum Öffnen der Tür auf einfache Weise das Lösen der Schnappverbindung gewährleisten und gleichzeitig ein zerstörungsfreies Lösen des ersten Fertigungshilfsteils und des zweiten Fertigungshilfsteils sicherstellen.

Im Folgenden wird die Erfindung anhand bevorzugter Ausführungsbeispiele unter Bezugnahme auf die beiliegenden Figuren beschrieben. Hierbei zeigen:
- Figur 1:: ein erfindungsgemäßes Fertigungshilfsmittel im montierten Zustand in einer perspektivischen Ansicht;
- Figur 2A:: ein erstes Fertigungshilfsteil des Fertigungshilfsmittels gemäß Figur 1 in einer perspektivischen Ansicht;
- Figur 2B:: das erste Fertigungshilfsteil gemäß Figur 2A in einer Seitenansicht;
- Figur 3A:: ein zweites Fertigungshilfsteil des Fertigungshilfsmittels gemäß Figur 1 in einer ersten perspektivischen Ansicht;
- Figur 3B:: das zweite Fertigungshilfsteil gemäß Figur 3A in einer zweiten perspektivischen Ansicht;
- Figur 3C:: das zweite Fertigungshilfsteil gemäß Figur 3A und 3B in einer Seitenansicht.

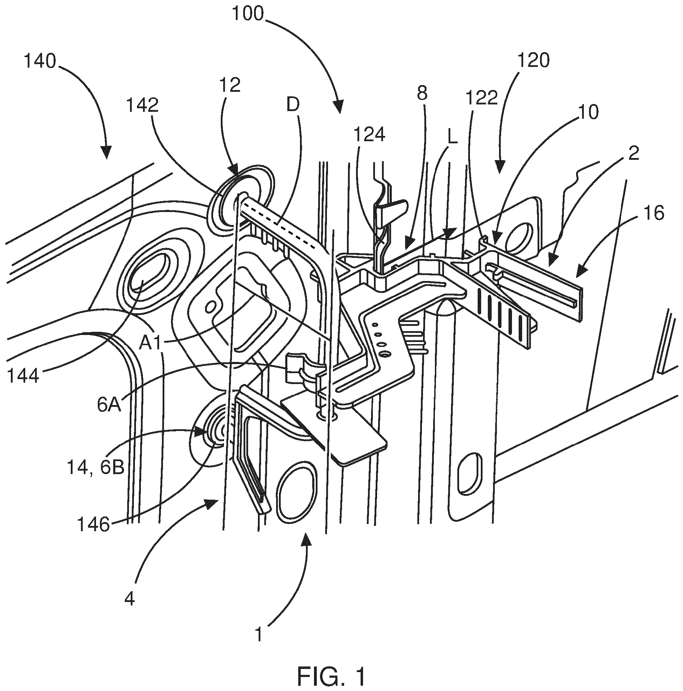

In Figur 1 ist ein Fertigungsmittel 1 beispielhaft im montierten Zustand in einer perspektivischen Ansicht gezeigt. Das Fertigungshilfsmittel 1 ist an einer Karosserie 100 montiert. Die Karosserie 100 umfasst einen Rahmen 120 und eine an dem Rahmen 120 befestigte Tür 140.

Das Fertigungshilfsmittel 1 ist dazu eingerichtet, die Tür 140 in einem definierten Abstand zu dem Rahmen 120 zu arretieren.

Zu diesem Zweck umfasst das Fertigungshilfsmittel ein erstes Fertigungshilfsteil 2 und ein zweites Fertigungshilfsteil 4, die mittels einer Schnappverbindung 6A miteinander im montierten Zustand in Eingriff sind. In dem gezeigten montierten Zustand ist das erste Fertigungshilfsteil 2 mit dem Rahmen 120 gekoppelt und das zweite Fertigungshilfsteil 4 ist mit der Tür 140 gekoppelt. Durch die Schnappverbindung 6A ist die Tür 140 auf einfache Weise reversibel mit dem Rahmen 120 koppelbar, wobei der Abstand, in welchem die Tür 140 relativ zu dem Rahmen 120 arretiert wird, durch das Fertigungshilfsmittel 1 vorgegeben ist. er Abstand beträgt bevorzugt 6 mm bis 8 mm.

Das erste Fertigungshilfsteil 2 umfasst eine Aufnahme 8 und ein Rastelement 10. Die Aufnahme 8 ist durch eine Linearbewegung in einer Längsrichtung L mit einem Keder 124 des Rahmens 120 in Eingriff bringbar. Das Rastelement 10 ist ferner durch eine Bewegung relativ zu der Aufnahme 8, wobei es sich vorliegend um eine Schwenkbewegung handelt, mit einer Montage-Schnittstelle 122 des Rahmens 120 in Eingriff bringbar. Bei der Montage-Schnittstelle 122 handelt es sich vorliegend um eine Ausnehmung im Rahmen 120. Alternativ kann es sich aber auch um eine Hinterschneidung des Rahmens handeln, mit welcher das Rastelement 10 formschlüssig in Eingriff gelangt.

Das zweite Fertigungshilfsteil 4 umfasst ein erstes Montageteil 12 und ein beabstandet von dem ersten Montageteil 12 angeordnetes zweites Montageteil 14. Das erste Montageteil 12 ist mit einer ersten vorliegend ovalen Öffnung 142 der Tür 140 in Eingriff bringbar. Alternativ wäre das erste Montageteil 12 auch mit einer anderen Öffnung, wie beispielsweise der zweiten ovalen Öffnung 144 der Tür 140 in Eingriff bringbar.

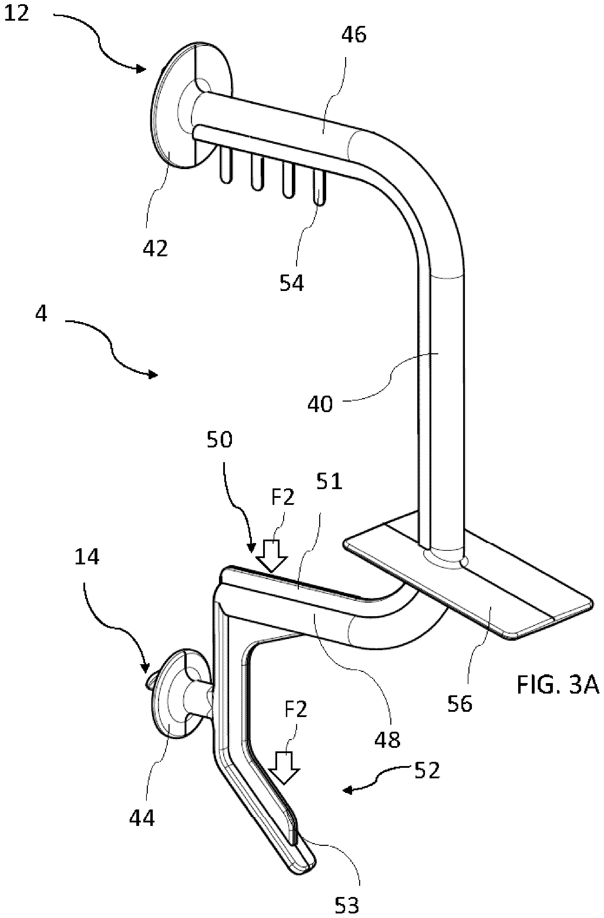

Das zweite Montageteil 14 ist mit einer Ausnehmung 146 der Tür 140 in Eingriff bringbar. Das erste Montageteil 12 ist zum Bringen des zweiten Fertigungshilfsteils 4 in den montierten Zustand mittels einer kombinierten Linearbewegung in Richtung einer Drehachse D, mit welcher das erste Montageteil 12 zumindest abschnittsweise in die erste ovale Öffnung 142 einbringbar ist, und eine anschließende Drehbewegung um die Drehachse D formschlüssig mit der ersten ovalen Öffnung 142 in Eingriff bringbar. Nachdem das erste Montageteil 12 mit der ersten ovalen Öffnung 142 in Eingriff gelangt ist, ist das zweite Montageteil 14 benachbart zu der Ausnehmung 146 angeordnet. In dieser Position kann das zweite Montageteil 14 durch Aufbringen einer Kraft F2 (vgl. Figur 3A) auf einen Abschnitt des zweiten Fertigungshilfsteils 4 mittels einer zweiten Schnappverbindung 6B formschlüssig mit der Ausnehmung 146 in Eingriff gebracht werden. In diesem Fall ist die Schnappverbindung 6A eine erste Schnappverbindung 6A.

Das erste Fertigungshilfsteil 2 weist ferner einen Hebelmechanismus 16 auf, welcher dazu eingerichtet ist, das Rastelement 10 zu betätigen, insbesondere durch ein Verschwenken relativ zu der Aufnahme 8 mit der Montage-Schnittstelle 122 in Eingriff bzw. außer Eingriff zu bringen.

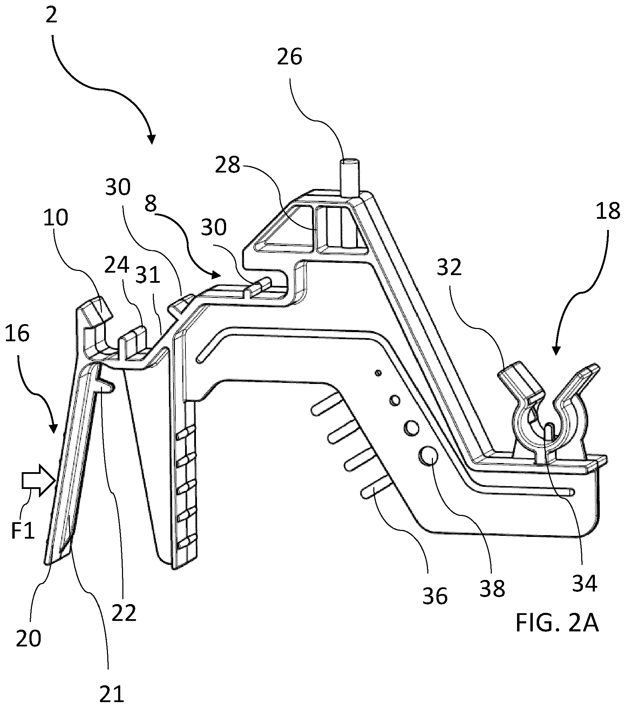

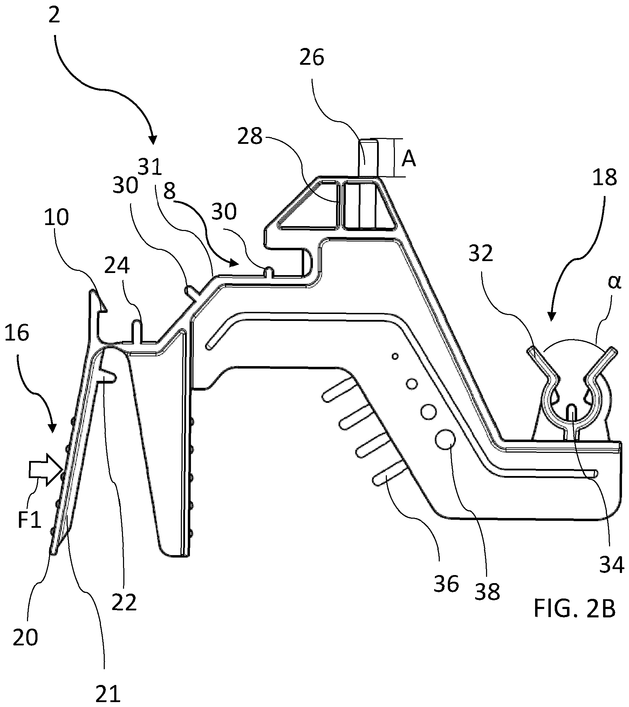

Die Figuren 2A und 2B zeigen das erste Fertigungshilfsteil 2 im Detail. Es wird auf die vorstehende Beschreibung der Figur 1 bezuggenommen. Gleiche bzw. ähnliche Bauteile haben identische Bezugszeichen. Das erste Fertigungshilfsteil 2 weist eine Schnapp-Aufnahme 18 auf, welche mit dem zweiten Fertigungshilfsteil 4 zum Ausbilden der Schnappverbindung 6A (vgl. Figur 1) in Eingriff bringbar ist.

Der Hebelmechanismus 16 weist einen mit dem Rastelement 10 gekoppelten Hebel 20 auf. Durch Aufbringen einer ersten Kraft F1, insbesondere einer Lösekraft auf den Hebel 20 ist das Rastelement 10 aus dem gekoppelten Zustand des ersten Fertigungshilfsteils 2 aus der Montage-Schnittstelle 122 heraus bewegbar und insbesondere mit der Montage-Schnittstelle 122 außer Eingriff bringbar. Der Hebelmechanismus 16 weist ferner eine sich entlang des Hebels 20 erstreckende Verstärkungsrippe 21 auf. An einem proximalen Ende des Hebels 20, benachbart zu dem Rastelement 10, ist ein Abstandshalter 22 ausgebildet, welcher dazu eingerichtet ist, ein zu weites Öffnen bzw. Verschwenken des Rastelements 10 durch den Hebel 20 zu verhindern. Wie insbesondere Figur 2B zeigt, weist das Rastelement 10 einen in Richtung der Aufnahme 8 zeigenden Vorsprung auf, welcher dazu eingerichtet ist, den Rand der vorliegend als Ausnehmung ausgebildeten Montage-Schnittstelle 122 zu hintergreifen und so formschlüssig mit dieser in Eingriff zu gelangen. Das zweite Fertigungshilfsteil 4 weist ferner ein benachbart zu dem Rastelement 10 angeordnetes Begrenzungselement 24 auf. Das Begrenzungselement 24 ist dazu eingerichtet, ein zu weites Vordringen des Rastelements 10 in die als Ausnehmung ausgebildete Montage-Schnittstelle 122 zu verhindern.

Weiterhin weist das erste Fertigungshilfsteil 2 eine Durchschlagsicherung 26 auf. Die Durchschlagsicherung 26 steht im montierten Zustand (vgl. Figur 1) in Richtung des Rahmens 120 in einem Sicherungsabstand A vor und ist in eine korrespondierende Ausnehmung des Rahmens 120 einbringbar. Die Durchschlagsicherung 26 steht gegenüber dem Rahmen 120 dabei derart in Richtung der Tür 140 (vgl. Figur 1) vor, dass die Tür 140 bei einer unbeabsichtigten Krafteinwirkung auf dieselbige in Richtung des Rahmens am vollständigen Schließen gehindert wird. Auf diese Weise können Schäden an der Lackierung verhindert werden. Wie insbesondere Figur 2B zeigt, weist das erste Fertigungshilfsteil 2 ferner zwei Positionierelemente 30 auf, welche auf einer Kontaktfläche 31 angeordnet sind. Die Positionierelemente 30 verhindern dabei einen flächigen Kontakt der Kontaktfläche 31 mit dem Rahmen 120 (vgl. Figur 1). Somit ist trotz etwaiger Toleranzen eine zuverlässige Anordnung des ersten Fertigungshilfsteils 2 gewährleistet und Schäden am Rahmen 120, insbesondere dem Keder 124, werden vermieden.

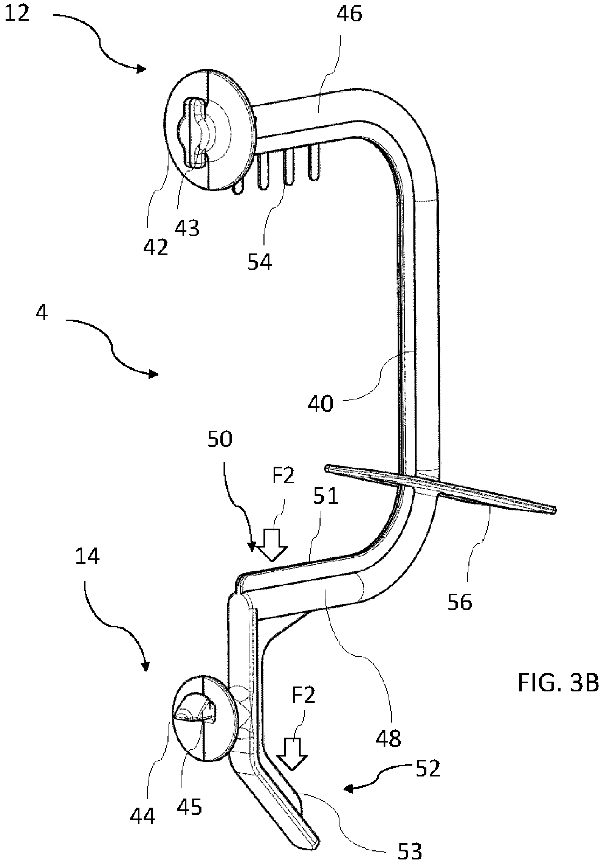

Die Schnapp-Aufnahme 18 weist einen Einführabschnitt 32 auf, welcher zwei Schenkel aufweist, die in einem Öffnungswinkel α relativ zueinander geneigt sind. Zum Ineingriffbringen des zweiten Fertigungshilfsteils 4 mit der Schnapp-Aufnahme 18 kommt das erste Fertigungshilfsteil 2 und insbesondere ein Kopplungsabschnitt 40 (vgl. Figur 3A, 3B) desselbigen zunächst mit dem Einführabschnitt 32 in Kontakt. Bei weiterer Krafteinwirkung auf das zweite Fertigungshilfsteil 4 in Richtung der Schnapp-Aufnahme 18 weitet sich der Einführabschnitt 32 auf, sodass der Kopplungsabschnitt 40 (vgl. Figur 3A, 3B) formschlüssig mit der Schnapp-Aufnahme 18 in Eingriff bringbar ist. Die Schnapp-Aufnahme 18 weist ferner drei Stützteile 34 auf, mit welchen der Kopplungsabschnitt 40 in gekoppeltem Zustand in Kontakt ist. Auf diese Weise wird der Kopplungsabschnitt 40 mit einem minimalen Kontakt innerhalb der Schnapp-Aufnahme von den Stützteilen 34 gehalten.

Weiterhin weist das erste Fertigungshilfsteil 2 eine Anzahl erster Prüfhilfen 36 auf, welche als vorstehende Stifte ausgebildet sind. Ein erfindungsgemäßes Fertigungshilfsmittel 1 (vgl. Figur 1) ist dazu eingerichtet, eine Mehrzahl von Lackierprozessen zu durchlaufen. Ist das Fertigungshilfsmittel 1 beispielsweise dazu eingerichtet, insgesamt vier Lackierzyklen zu durchlaufen, so sind vier Stifte der ersten Prüfhilfe 36 vorgesehen. Nach jedem Lackierzyklus kann einer dieser Stifte abgebrochen werden, sodass die verbleibende Anzahl der Stifte die verbleibenden zulässigen Lackierzyklen angibt.

Weiterhin umfasst das erste Fertigungshilfsteil 2 eine zweite Prüfhilfen 38, welche als insgesamt vier Bohrungen unterschiedlicher Durchmesser ausgebildet ist. Die zweite Prüfhilfe 38 ist dabei so ausgebildet, dass nach dem Durchlaufen eines ersten Lackierzyklus die Bohrung mit dem geringsten Durchmesser durch den vorhandenen Lack vollständig verschlossen wird. Nach dem zweiten Lackierzyklus wird schließlich die Bohrung mit dem zweitkleinsten Durchmesser vollständig von Lack verschlossen. Es versteht sich, dass nach Durchlaufen des vierten Lackierzyklus schließlich auch die Bohrung mit dem größten Durchmesser der zweiten Prüfhilfe 38 vollständig verschlossen ist.

Die Figuren 3A bis 3C zeigen das zweite Fertigungshilfsteil 4 im Detail. Es wird auf die vorstehende Beschreibung der Figur 1 bezuggenommen. Gleiche bzw. ähnliche Bauteile haben identische Bezugszeichen. Wie insbesondere der perspektivischen Ansicht gemäß Figur 3B zu entnehmen ist, umfasst das erste Montageteil 12 eine Platte 42 mit kreisförmigem Querschnitt und ein Verriegelungsteil 43, welches mittig in der Platte 42 angeordnet ist. Die Platte 42 ist dazu eingerichtet, in Anlage mit einem Abschnitt der Tür 140 gebracht zu werden. Das Verriegelungsteil 43 ist dazu eingerichtet, in eine erste ovale Öffnung 142 der Tür 140 eingebracht zu werden und durch eine Drehbewegung um die Drehachse D (vgl. Figur 1) formschlüssig mit der ersten ovalen Öffnung 142 in Eingriff gebracht zu werden.

Das zweite Montageteil 14 weist ebenfalls eine Platte 44 und ein Verriegelungsteil 45 auf. Die Platte 44 des zweiten Montageteils 14 wird im Folgenden als zweite Platte bezeichnet und das Verriegelungsteil 45 des zweiten Montageteils 14 wird im Folgenden als zweites Verriegelungsteil bezeichnet.

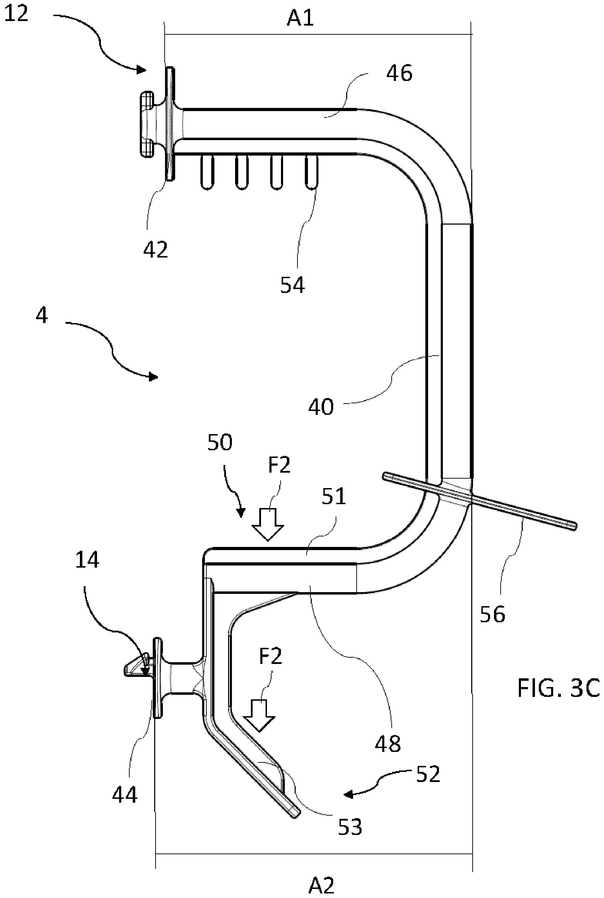

Das zweite Fertigungshilfsteil 4 weist ferner einen ersten Verbindungsabschnitt 46 angrenzend an das erste Montageteil 12 sowie einen zweiten Verbindungsabschnitt 48 zwischen dem Kopplungsabschnitt 40 und dem zweiten Montageteil 14 auf. Der Kopplungsabschnitt 40 verbindet den ersten Verbindungsabschnitt 46 und den sich im Wesentlichen parallel zu dem ersten Verbindungsabschnitt erstreckenden zweiten Verbindungsabschnitt 48. Der zweite Verbindungsabschnitt 48 bildet gleichzeitig zumindest teilweise den Montageabschnitt 50 aus. Wie insbesondere die Seitenansicht gemäß Figur 3C zeigt, weist der Kopplungsabschnitt 40 gegenüber dem ersten Montageteil 12 einen ersten Abstand A1 auf und gegenüber dem zweiten Montageteil 14 einen zweiten Abstand A2 auf. Gemäß einer nicht gezeigten bevorzugten Ausführungsform kann der erste Abstand A1 identisch zu dem zweiten Abstand A2 sein. Der erste bzw. zweite Abstand A1, A2 ist bevorzugt so gewählt, dass das zweite Fertigungshilfsteil 4 im montierten Zustand beabstandet zu dem Rahmen und insbesondere dem Türschweller angeordnet ist, sodass herabfallender Lack aus dem Bereich der Schnappverbindung 6A (vgl. Figur 1) nicht in sichtbare Bereiche der Karosserie gelangen und auf diese Weise Schäden verursachen kann.

Wie insbesondere die Seitenansicht gemäß Figur 3B zeigt, weist das zweite Verriegelungsteil 45 eine Rastnase auf. Diese Rastnase ist durch Aufbringen einer zweiten Kraft F2 auf einen ersten Montageabschnitt 50 bzw. einen zweiten Montageabschnitt 52 in eine Position bringbar, in welcher das zweite Verriegelungsteil 45 in die Ausnehmung 146 der Tür 140 einbringbar ist. Die minimale Kraft F2 zum Lösen und auch zum Ineingriffbringen der Rastnase ist dabei identisch. Anschließend bewegt sich das zweite Verriegelungsteil 45 in Richtung des ersten Montageteils 12, wobei die Rastnase des zweiten Verriegelungsteils 45 mit der Ausnehmung 146 formschlüssig in Eingriff gelangt.

Der erste Montageabschnitt 50 weist eine erste Montagerippe 51 auf und der zweite Montageabschnitt 52 weist eine zweite Montagerippe 53 auf. Die Montagerippen 51, 53 sind dazu eingerichtet, den ersten Montageabschnitt 50 und den zweiten Montageabschnitt 52 zu verstärken und eine Beschädigung des zweiten Fertigungshilfsteils 4 bei wiederholter Krafteinwirkung zu verhindern.

Das zweite Fertigungshilfsteil 4 weist ferner einen ersten Verbindungsabschnitt 46 angrenzend an das erste Montageteil 12 sowie einen zweiten Verbindungsabschnitt 48 zwischen dem Kopplungsabschnitt 40 und dem zweiten Montageteil 14 auf. Der Kopplungsabschnitt 40 verbindet den ersten Verbindungsabschnitt 46 und den sich im Wesentlichen parallel zu dem ersten Verbindungsabschnitt 46 erstreckenden zweiten Verbindungsabschnitt 48. Der zweite Verbindungsabschnitt 48 bildet gleichzeitig zumindest teilweise den Montageabschnitt 50 aus.

Wie insbesondere die Seitenansicht gemäß Figur 3C zeigt, weist der Kopplungsabschnitt 40 gegenüber dem ersten Montageteil 12 einen ersten Abstand A1 auf und gegenüber dem zweiten Montageteil 14 einen zweiten Abstand A2 auf.

Gemäß einer nicht gezeigten bevorzugten Ausführungsform kann der erste Abstand A1 identisch zu dem zweiten Abstand A2 sein. Der erste bzw. zweite Abstand A1, A2 ist bevorzugt so gewählt, dass das zweite Fertigungshilfsteil 4 im montierten Zustand beabstandet zu dem Rahmen und insbesondere dem Türschweller angeordnet ist, sodass herabfallender Lack aus dem Bereich der Schnappverbindung 6A (vgl. Figur16) nicht in sichtbare Bereiche der Karosserie gelangen und auf diese Weise Schäden verursachen kann.

Zur Vermeidung von Schäden, insbesondere im Bereich des Schwellers (nicht gezeigt) weist das zweite Fertigungshilfsteil 4 ferner ein Ablenkelement 56 auf. Das Ablenkelement 56 ist im Bereich des Kopplungsabschnitts 40 angeordnet und im montierten Zustand unterhalb der Schnappverbindung 6A (vgl. Figur 1) positioniert. Herabfallender Lack, welcher sich beim Öffnen der Tür 140 von der Schnappverbindung 6A (vgl. Figur 1) löst, fällt zunächst auf das Ablenkelement 56 und wird von diesem in Richtung des Fahrzeuginneren, weg von dem Rahmen 120 und der Tür 140 geleitet. In diesem Bereich wird üblicherweise anschließend ein Teppich verlegt, sodass herabfallende Lackreste keine sichtbaren Schäden bzw. Verschmutzungen an der Karosserie verursachen.

Entsprechend dem ersten Fertigungshilfsteil 2 weist auch das zweite Fertigungshilfsteil 4 eine Prüfhilfe, nämlich die dritte Prüfhilfe 54 auf. Die dritte Prüfhilfe 54 umfasst vier Stifte, welche vorliegend an dem ersten Verbindungsabschnitt 46 angeordnet sind. Die Stifte sind derart ausgebildet, dass sie in einfachere Weise abgebrochen werden können, um die Anzahl der durchlaufenen Lackierzyklen anzuzeigen.

### Bezugszeichenliste

- 1: Fertigungshilfsmittel
- 2: erstes Fertigungshilfsteil
- 4: zweites Fertigungshilfsteil
- 6A: (erste) Schnappverbindung
- 6B: zweite Schnappverbindung
- 8: Aufnahme
- 10: Rastelement
- 12: erstes Montageteil
- 14: zweites Montageteil
- 16: Hebelmechanismus
- 18: Schnapp-Aufnahme
- 20: Hebel
- 21: Verstärkungsrippe Hebel
- 22: Abstandshalter
- 24: Begrenzungselement
- 26: Durchschlagsicherung
- 28: Verstärkungsrippe (Durchschlagsicherung)
- 30: Positionierelement
- 31: Kontaktfläche
- 32: Einführabschnitt
- 34: Stützteile
- 36: erste Prüfhilfen
- 38: zweite Prüfhilfen
- 40: Kopplungsabschnitt
- 42: erste Auflageplatte
- 43: erstes Verriegelungsteil
- 44: zweite Auflageplatte
- 45: zweites Verriegelungsteil
- 46: oberer Verbindungsabschnitt
- 48: unterer Verbindungsabschnitt
- 50: erster Montageabschnitt
- 51: erste Montagerippe
- 52: zweiter Montageabschnitt
- 53: zweite Montagerippe
- 54: dritte Prüfhilfen
- 56: Ablenkelement
- 100: Karosserie
- 120: Rahmen
- 122: Montage-Schnittstelle, Ausnehmung, Hinterschneidung
- 124: Keder
- 140: Tür
- 142: erste ovale Öffnung in der Tür
- 144: zweite ovale Öffnung in der Tür
- 146: Ausnehmung
- L: Längsrichtung
- F1: erste Kraft, Lösekraft
- F2: zweite Kraft, Lösekraft
- A: Sicherungsabstand
- A1: erster Abstand
- A2: zweiter Abstand
- D: Drehachse
- α: Öffnungswinkel

## Patentansprüche

1. Fertigungshilfsmittel (1) für die Lackierung einer Karosserie (100), insbesondere einer Kraftfahrzeug-Karosserie (100), mit einem Rahmen (120) und einer an dem Rahmen (120) montierten Tür (140), **dadurch gekennzeichnet, dass** das Fertigungshilfsmittel (1) umfasst:
- ein erstes Fertigungshilfsteil (2) zur lösbaren Kopplung mit dem Rahmen (120); und
- ein zweites Fertigungshilfsteil (4) zur lösbaren Kopplung mit der Tür (140), mit einem ersten Montageteil (12), welches dazu eingerichtet ist, formschlüssig mit der Tür (140) in Eingriff gebracht zu werden, und/oder einem zweiten Montageteil (14), welches dazu eingerichtet ist, eine Schnappverbindung (6b) mit der Tür (140) auszubilden;
wobei das erste Fertigungshilfsteil (2) und das zweiten Fertigungshilfsteil (4) dazu eingerichtet sind, mittels einer Schnappverbindung (6a) lösbar miteinander in Eingriff gebracht zu werden und in einem montierten Zustand, in welchem das erste Fertigungshilfsteil (2) mit dem Rahmen (120) und das zweite Fertigungshilfsteil (4) mit der Tür (140) gekoppelt ist, die Tür (140) beabstandet zu dem Rahmen (120) zu arretieren,
wobei ein Kopplungsabschnitt (40) des zweiten Fertigungshilfsteils (4) und damit die das erste Fertigungshilfsteil (2) mit dem zweiten Fertigungshilfsteil (4) verbindende Schnappverbindung (6a) in einem Abstand (A1, A2) zu dem ersten Montageteil (12) und/oder dem zweiten Montageteil (14) angeordnet ist, derart, dass der Kopplungsabschnitt (40) im montierten Zustand zu dem Rahmen (120) und der Tür (140) beabstandet ist,
**dadurch gekennzeichnet, dass** der Abstand (A1, A2) des Kopplungsabschnitts (40) zu dem ersten Montageteil (12) und/oder dem zweiten Montageteil (14) 50 mm bis 80 mm beträgt.

2. Fertigungshilfsmittel (1) nach Anspruch 1,
wobei das erste Fertigungshilfsteil (2) umfasst:
- eine formschlüssig mit dem Rahmen (120) in Eingriff bringbare Aufnahme (8), und
- ein relativ zu der Aufnahme (8) bewegbares Rastelement (10), welches dazu eingerichtet ist, formschlüssig in eine korrespondierende Montage-Schnittstelle (122) des Rahmens (120) einzugreifen.

3. Fertigungshilfsmittel (1) nach Anspruch 2,
wobei die Aufnahme (8) durch eine Linearbewegung in einer Längsrichtung (L) mit dem Rahmen (120) in Eingriff bringbar und dazu eingerichtet ist, Kräfte orthogonal zur Längsrichtung (L) aufzunehmen.

4. Fertigungshilfsmittel (1) nach einem der Ansprüche 2 oder 3,
wobei das Rastelement (10) durch eine elastische Verformung des ersten Fertigungshilfsteils (2) in einer Rastposition mit der Montage-Schnittstelle (122) in Eingriff bringbar ist, derart, dass das Rastelement (10) durch eine Bewegung relativ zu der Aufnahme (8), welche zumindest eine Bewegungskomponente orthogonal zur Längsrichtung (L) aufweist, mit der Montage-Schnittstelle (122) des Rahmens (120) in Eingriff bringbar ist.

5. Fertigungshilfsmittel (1) nach einem der Ansprüche 2 bis 4,
wobei die Montage-Schnittstelle (122) als eine Ausnehmung und/oder eine Hinterschneidung des Rahmens (120) ausgebildet ist.

6. Fertigungshilfsmittel (1) nach Anspruch 5,
wobei das Rastelement (10) innerhalb der Ausnehmung und/oder Hinterschneidung von einer bzw. der Rastposition, in welcher das Rastelement (10) formschlüssig mit der Montage-Schnittstelle (122) in Eingriff ist, in eine Löseposition verschwenkbar ist, in welcher das Rastelement (10) aus der Montage-Schnittstelle (122) heraus bewegbar ist.

7. Fertigungshilfsmittel (1) nach einem der Ansprüche 4 bis 6,
wobei das Rastelement (10) dazu eingerichtet ist, in der Rastposition Kräfte orthogonal zur Längsrichtung (L) aufzunehmen, derart, dass die im montierten Zustand mit dem Rahmen (120) in Eingriff stehende Aufnahme (8) arretiert wird.

8. Fertigungshilfsmittel (1) nach einem der Ansprüche 4 bis 7,
wobei das erste Fertigungshilfsteil (2) einen Hebelmechanismus (16) aufweist, der einen mit dem Rastelement (10) gekoppelten Hebel (20) umfasst, und
wobei das Rastelement (10) durch aufbringen einer Lösekraft (F1) auf den Hebel (20) von der Rastposition in eine bzw. die Löseposition bringbar ist, und die Lösekraft (F1) zumindest eine Komponente in Längsrichtung (L) aufweist.

9. Fertigungshilfsmittel (1) nach einem der Ansprüche 2 bis 8,
wobei das erste Fertigungshilfsteil (2) eine Durchschlagsicherung (26) aufweist, welche dazu eingerichtet ist, im montierten Zustand von dem Rahmen (120) in Richtung der Tür (140) in einem Sicherungsabstand (A) vorzustehen.

10. Fertigungshilfsmittel (1) nach Anspruch 9,
wobei der Sicherungsabstand (A) in einem Bereich von 1,5 mm bis 6,5 mm liegt, besonders bevorzugt in einem Bereich von 2 mm bis 6 mm.

11. Fertigungshilfsmittel (1) nach Anspruch 9 oder 10,
wobei das erste Fertigungshilfsteil (2) mindestens eine zwischen der Durchschlagsicherung (26) und der Aufnahme (8) angeordnete Verstärkungsrippe (21) aufweist, welche dazu eingerichtet ist, in die Durchschlagsicherung (26) eingeleitete Kräfte im montierten Zustand über die Aufnahme (8) in den Rahmen (120) abzuleiten.

12. Fertigungshilfsmittel (1) nach einem der Ansprüche 2 bis 11,
wobei das erste Fertigungshilfsteil (2) im Bereich der Aufnahme (8) und/oder benachbart zu dem Rastelement (10) mindestens ein im montierten Zustand in Richtung des Rahmens (120) vorstehendes Positionierelement (30) aufweist, welches dazu eingerichtet ist, einen Punkt- und/oder Linienkontakt mit dem Rahmen (120) einzugehen, um eine Kontaktfläche des ersten Fertigungshilfsteils (2) beabstandet zu dem Rahmen (120) zu halten.

13. Fertigungshilfsmittel (1) nach einem der Ansprüche 2 bis 12,
wobei das erste Fertigungshilfsteil (2) mindestens ein benachbart zu dem Rastelement (10) angeordnetes Begrenzungselement (24) aufweist, welches dazu eingerichtet ist, die Bewegung des Rastelements (10) orthogonal zur Längsrichtung (L) zu begrenzen.

14. Fertigungshilfsmittel (1) nach einem der vorstehenden Ansprüche,
wobei das erste Fertigungshilfsteil (2) eine Schnapp-Aufnahme (18) und das zweite Fertigungshilfsteil (4) den Kopplungsabschnitt (40) zum Ausbilden der Schnappverbindung (6) aufweist, wobei die Schnapp-Aufnahme (18) dazu eingerichtet ist, sich reversibel elastisch zu verformen, um den Kopplungsabschnitt (40) aufzunehmen.

15. Fertigungshilfsmittel (1) nach Anspruch 14,
wobei das erste Fertigungshilfsteil (2) einen mit der Schnapp-Aufnahme (18) verbundenen Einführabschnitt (32) aufweist, und der Kopplungsabschnitt (40) dazu eingerichtet ist, eine Kraft auf den Einführabschnitt (32) auszuüben, um die Schnapp-Aufnahme (18) reversibel elastisch zu verformen.

16. Fertigungshilfsmittel (1) nach einem der vorstehenden Ansprüche,
wobei das erste Montageteil (12) in eine Öffnung (142, 144) der Tür (140) einbringbar und durch eine Rotation um eine Drehachse (D) in eine Verriegelungsstellung bringbar ist, in welcher das erste Montageteil (12) formschlüssig mit der Öffnung (142, 144) in Eingriff ist, und
wobei das zweite Fertigungshilfsteil (4) elastisch verformbar ist, derart, dass das zweite Montageteil (14) für den Fall, dass das erste Montageteil (12) mit der Öffnung (142, 144) in Eingriff ist, durch Ausbilden einer Schnappverbindung mit der Tür (140) in Eingriff bringbar ist.

17. Fertigungshilfsmittel (1) nach Anspruch 16,
wobei das zweite Fertigungshilfsteil (4) mindestens einen Montageabschnitt (50, 52) aufweist und dazu eingerichtet ist, sich durch Aufbringen einer Lösekraft (F2) auf den Montageabschnitt (50, 52) reversibel elastisch zu Verformen, um das zweite Montageteil (14) und die Tür (140) außer Eingriff zu bringen.

18. Fertigungshilfsmittel (1) nach einem der Ansprüche 14 bis 17,
wobei das zweite Fertigungshilfsteil (4) ein im montierten Zustand unterhalb des Kopplungsabschnitts (40) angeordnetes Ablenkelement (56) aufweist, welches dazu eingerichtet ist, vom Kopplungsabschnitt (40) und/oder der Schnapp-Aufnahme (18) herabfallende Lackreste aufzunehmen und von der Tür (140) und/oder dem Rahmen (120) wegzuleiten.

19. Fertigungshilfsmittel (1) nach einem der vorstehenden Ansprüche,
wobei das Fertigungshilfsmittel (1) ein thermoplastisches Polymer umfasst, vorzugsweise ein glasfaserverstärktes Polymer, besonders bevorzugt Polyamid 6 mit einem Glasfaseranteil von 20 % bis 40 %, und/oder
wobei das Fertigungshilfsmittel (1) durch einen Spritzgussprozess hergestellt ist.

20. Verfahren zum lösbaren Arretieren einer Tür (140) an einem Rahmen (120) einer Karosserie (100), insbesondere einer Kraftfahrzeug-Karosserie (100), mit den Schritten:
- Bereitstellen eines Fertigungshilfsmittels (1) nach einem der Ansprüche 1 bis 19,
- lösbares Koppeln eines erstes Fertigungshilfsteils (2) mit dem Rahmen (120),
- lösbares Koppeln eines zweiten Fertigungshilfsteils (4) mit der Tür (140),
- Bewegen der Tür (140) in Richtung einer geschlossenen Position der Tür (140), wobei das erste Fertigungshilfsteil (2) und das zweiten Fertigungshilfsteil mittels einer Schnappverbindung (6a) lösbar miteinander in Eingriff gebracht werden, und
- Arretieren der Tür (140) beabstandet zu dem Rahmen (120) durch das Fertigungshilfsmittel (1).

21. Verfahren nach Anspruch 20, ferner umfassend die Schritte:
- Bewegen der Tür (140) in Richtung einer geöffneten Position der Tür (140), wobei das erste Fertigungshilfsteil (2) und das zweiten Fertigungshilfsteil außer Eingriff gebracht werden,
- elastisches Verformen des ersten Fertigungshilfsteils (2) durch Aufbringen einer ersten Lösekraft (F1) zum Entkoppeln des ersten Fertigungshilfsteils (2) und des Rahmens (120), und
- elastisches Verformen des zweiten Fertigungshilfsteils (4) durch Aufbringen einer zweiten Lösekraft (F2) und anschließendes Rotieren des zweiten Fertigungshilfsteils (4) um eine Drehachse (D) zum Entkoppeln des zweiten Fertigungshilfsteils (4) und der Tür (140).

## Claims

1. Production resource (1) for painting a vehicle body (100), in particular a motor vehicle body (100), having a frame (120) and a door (140) mounted on the frame (120), **characterised in that** the production resource (1) comprises:
- a first production resource part (2) for releasable coupling to the frame (120); and
- a second production resource part (4) for releasable coupling to the door (140), having a first assembly part (12) that is configured to be engaged in an interlocking manner with the door (140) and/or a second assembly part (14) that is configured to form a snap connection (6b) with the door (140);
wherein the first production resource part (2) and the second production resource part (4) are configured to be releasably engaged with each other by means of a snap-fit connection (6a) and, in a mounted state in which the first production resource part (2) is coupled to the frame (120) and the second production resource part (4) is coupled to the door (140), to lock the door (140) at a distance from the frame (120),
wherein a coupling section (40) of the second production resource part (4) and thus the snap connection (6a) connecting the first production resource part (2) to the second production resource part (4) is arranged at a distance (A1, A2) ) to the first assembly part (12) and/or the second assembly part (14) in such a way that the coupling section (40) is at a distance from the frame (120) and the door (140) in the mounted state,
**characterized in that** the distance (A1, A2) of the coupling section (40) to the first assembly part (12) and/or the second assembly part (14) is 50 mm to 80 mm.

2. Production resource (1) according to claim 1,
wherein the first production resource part (2) comprises:
- a receiver (8) that can be brought into form-fitting engagement with the frame (120), and
- a latching element (10) that can be moved relative to the receiver (8) and is configured to engage in a form-fitting manner in a corresponding assembly interface (122) of the frame (120).

3. Production resource (1) according to claim 2,
wherein the receiver (8) is configured to be brought into engagement with the frame (120) by a linear movement in a longitudinal direction (L) and to absorb forces orthogonal to the longitudinal direction (L).

4. Production resource (1) according to one of claims 2 or 3,
wherein the latching element (10) can be brought into engagement with the assembly interface (122) in a latching position by an elastic deformation of the first production resource part (2), in such a way that the latching element (10) can be brought into engagement with the mounting interface (122) of the frame (120) by a movement which has at least one component of movement orthogonal to the longitudinal direction (L) relative to the receiver (8).

5. Production resource (1) according to one of claims 2 to 4,
wherein the assembly interface (122) is formed as a recess and/or an undercut of the frame (120).

6. Production resource (1) according to claim 5,
wherein the latching element (10) is pivotable within the recess and/or undercut from a latching position, in which the latching element (10) is in form-fitting engagement with the assembly interface (122), into a release position, in which the latching element (10) is movable out of the assembly interface (122).

7. Production resource (1) according to one of claims 4 to 6,
wherein the latching element (10) is configured to absorb forces orthogonal to the longitudinal direction (L) in the latching position, such that the receiver (8) which is in engagement with the frame (120) in the mounted state is locked.

8. Production resource (1) according to one of claims 4 to 7,
wherein the first production resource part (2) has a lever mechanism (16) which comprises a lever (20) coupled to the latching element (10), and
wherein the latching element (10) can be brought from the latching position into a release position or the release position by applying a release force (F1) to the lever (20), and the release force (F1) has at least one component in the longitudinal direction (L).

9. Production resource (1) according to one of claims 2 to 8,
wherein the first production resource part (2) has an puncture protection (26) which is configured to project in the mounted state from the frame (120) in the direction of the door (140) at a protection distance (A).

10. Production resource (1) according to claim 9,
wherein the securing distance (A) is in a range from 1.5 mm to 6.5 mm, particularly preferably in a range from 2 mm to 6 mm.

11. Production resource (1) according to claim 9 or 10,
wherein the first production resource part (2) has at least one reinforcing rib (21) which is arranged between the puncture protection (26) and the receiver (8) and which is configured to divert forces introduced into the puncture protection (26) in the mounted state via the receiver (8) into the frame (120).

12. Production resource (1) according to one of claims 2 to 11,
wherein the first production resource part (2) has, in the region of the receiver (8) and/or adjacent to the latching element (10), at least one positioning element (30) which, in the mounted state, projects in the direction of the frame (120) which is configured to make point and/or line contact with the frame (120) in order to keep a contact surface of the first production resource part (2) at a distance from the frame (120).

13. Production resource (1) according to one of claims 2 to 12,
wherein the first production resource part (2) has at least one limiting element (24) arranged adjacent to the latching element (10), which limiting element is configured to limit the movement of the latching element (10) orthogonally to the longitudinal direction (L).

14. Production resource (1) according to one of the preceding claims,
wherein the first production resource part (2) has a snap receiver (18) and the second production resource part (4) has the coupling section (40) for forming the snap connection (6), wherein the snap receiver (18) is configured to deform reversibly and elastically in order to receive the coupling section (40).

15. Production resource (1) according to claim 14,
wherein the first production resource part (2) comprises an insertion portion (32) connected to the snap receiver (18), and the coupling portion (40) is configured to exert a force on the insertion portion (32) to reversibly elastically deform the snap receiver (18).

16. Production resource (1) according to one of the preceding claims,
wherein the first assembly part (12) can be introduced into an opening (142, 144) of the door (140) and can be brought by rotation about an axis of rotation (D) into a locking position in which the first assembly part (12) is in form-fitting engagement with the opening (142, 144), and
wherein the second production resource part (4) is elastically deformable such that, when the first assembly part (12) is engaged with the opening (142, 144), the second assembly part (14) is engageable with the door (140) by forming a snap-fit connection.

17. Production resource (1) according to claim 16,
wherein the second production resource part (4) comprises at least one mounting portion (50, 52) and is configured to reversibly elastically deform upon application of a release force (F2) to the mounting portion (50, 52) to disengage the second mounting part (14) and the door (140).

18. Production resource (1) according to one of claims 14 to 17,
wherein the second production resource part (4) has a deflector element (56) which, in the mounted state, is arranged below the coupling section (40) and is configured to receive paint residues falling from the coupling section (40) and/or the snap receiver (18) and to direct them away from the door (140) and/or the frame (120).

19. Production resource (1) according to one of the preceding claims,
wherein the production resource (1) comprises a thermoplastic polymer, preferably a glass-fibre reinforced polymer, particularly preferably polyamide 6 with a glass-fibre content of 20% to 40%, and/or
wherein the production resource (1) is produced by an injection moulding process.

20. A method for releasably locking a door (140) to a frame (120) of a vehicle body (100), in particular a motor vehicle body (100), comprising the steps of:
- providing a production resource (1) according to one of claims 1 to 19,
- detachably coupling a first production resource part (2) to the frame (120),
- detachably coupling a second production resource part (4) to the door (140),
moving the door (140) toward a closed position of the door (140), wherein the first production resource part (2) and the second production resource part are releasably engaged with each other by means of a snap connection (6a), and
- locking the door (140) at a distance from the frame (120) by the production resource (1).

21. A method according to claim 20, further comprising the steps of:
- moving the door (140) towards an open position of the door (140), wherein the first production resource part (2) and the second production resource part are disengaged, resiliently deforming the first production resource part (2) by applying a first release force (F1) to decouple the first production resource part (2) and the frame (120), and
- elastically deforming the second production resource part (4) by applying a second release force (F2) and then rotating the second production resource part (4) about an axis of rotation (D) to decouple the second production resource part (4) and the door (140).

## Revendications

1. Auxiliaire de fabrication (1) pour la mise en peinture d'une carrosserie (100), en particulier une carrosserie de véhicule à moteur (100), avec un châssis (120) et une porte (140) montée sur le châssis (120), **caractérisé en ce que** l'auxiliaire de fabrication (1) comprend :
- une première pièce auxiliaire de fabrication (2) à accoupler de manière libérable au châssis (120) ; et
- une deuxième pièce auxiliaire de fabrication (4) à accoupler de manière libérable à la porte (140), avec une première pièce de montage (12), laquelle est conçue pour être amenée en prise avec la porte (140) par coopération de formes, et/ou une deuxième pièce de montage (14), laquelle est conçue pour réaliser une liaison par encliquetage (6b) avec la porte (140) ;
dans lequel la première pièce auxiliaire de fabrication (2) et la deuxième pièce auxiliaire de fabrication (4) sont conçues pour être amenées en prise l'une avec l'autre de manière libérable au moyen d'une liaison par encliquetage (6a) et dans un état monté, dans lequel la première pièce auxiliaire de fabrication (2) est accouplée au châssis (120) et la deuxième pièce auxiliaire de fabrication (4) à la porte (140), pour bloquer la porte (140) de manière espacée du châssis (120),
dans lequel une partie d'accouplement (40) de la deuxième pièce auxiliaire de fabrication (4) et ainsi la liaison par encliquetage (6a) reliant la première pièce auxiliaire de fabrication (2) à la deuxième pièce auxiliaire de fabrication (4) est disposée à une distance (A1, A2) de la première pièce de montage (12) et/ou de la deuxième pièce de montage (14), de telle sorte que la partie d'accouplement (40) dans l'état monté est espacée du châssis (120) et de la porte (140),
**caractérisé en ce que** la distance (A1, A2) de la partie d'accouplement (40) par rapport à la première pièce de montage (12) et/ou la deuxième pièce de montage (14) atteint 50 mm à 80 mm.

2. Auxiliaire de fabrication (1) selon la revendication 1,
dans lequel la première pièce auxiliaire de fabrication (2) comprend :
- un logement (8) pouvant être amené en prise par coopération de formes avec le châssis (120), et
- un élément d'encliquetage (10) mobile par rapport au logement (8), lequel est conçu pour s'insérer par coopération de formes dans une interface de montage (122) correspondante du châssis (120).

3. Auxiliaire de fabrication (1) selon la revendication 2,
dans lequel le logement (8) peut être amené en prise avec le châssis (120) par un mouvement linéaire dans une direction longitudinale (L) et est conçu pour recevoir des forces perpendiculaires à la direction longitudinale (L).

4. Auxiliaire de fabrication (1) selon l'une quelconque des revendications 2 ou 3,
dans lequel l'élément d'encliquetage (10) peut être amené en prise avec l'interface de montage (122) dans une position d'encliquetage par une déformation élastique de la première pièce auxiliaire de fabrication (2), de telle sorte que l'élément d'encliquetage (10) peut être amené en prise avec l'interface de montage (122) du châssis (120) par un mouvement par rapport au logement (8), lequel présente au moins une composante de mouvement perpendiculaire à la direction longitudinale (L).

5. Auxiliaire de fabrication (1) selon l'une quelconque des revendications 2 à 4,
dans lequel l'interface de montage (122) est réalisée comme un évidement et/ou un dégagement du châssis (120).

6. Auxiliaire de fabrication (1) selon la revendication 5,
dans lequel l'élément d'encliquetage (10) à l'intérieur de l'évidement et/ou du dégagement peut pivoter à partir d'une ou de la position d'encliquetage, dans laquelle l'élément d'encliquetage (10) est en prise par coopération de formes avec l'interface de montage (122), dans une position de libération, dans laquelle l'élément d'encliquetage (10) peut se déplacer à l'extérieur de l'interface de montage (122).

7. Auxiliaire de fabrication (1) selon l'une quelconque des revendications 4 à 6,
dans lequel l'élément d'encliquetage (10) est conçu pour recevoir des forces perpendiculaires à la direction longitudinale (L) dans la position d'encliquetage, de telle sorte que le logement (8) en prise avec le châssis (120) dans l'état monté est bloqué.

8. Auxiliaire de fabrication (1) selon l'une quelconque des revendications 4 à 7,
dans lequel la première pièce auxiliaire de fabrication (2) présente un mécanisme à levier (16), qui comprend un levier (20) accouplé à l'élément d'encliquetage (10), et
dans lequel l'élément d'encliquetage (10) peut être amené à partir de la position d'encliquetage dans une ou la position de libération par application d'une force de libération (F1) sur le levier (20), et la force de libération (F1) présente au moins une composante dans la direction longitudinale (L).

9. Auxiliaire de fabrication (1) selon l'une quelconque des revendications 2 à 8,
dans lequel la première pièce auxiliaire de fabrication (2) présente une protection anti-claquage (26), lequel est conçu, dans l'état monté, pour faire saillie du châssis (120) en direction de la porte (140) à une distance de protection (A).

10. Auxiliaire de fabrication (1) selon la revendication 9,
dans lequel la distance de protection (A) se situe dans une plage de 1,5 mm à 6,5 mm, de manière particulièrement préférée dans une plage de 2 mm à 6 mm.

11. Auxiliaire de fabrication (1) selon la revendication 9 ou 10,
dans lequel la première pièce auxiliaire de fabrication (2) présente au moins une nervure de renforcement (21) disposée entre la protection anti-claquage (26) et le logement (8), laquelle est conçue pour dévier les forces introduites dans la protection anti-claquage (26) dans l'état monté dans le châssis (120) par l'intermédiaire du logement (8).

12. Auxiliaire de fabrication (1) selon l'une quelconque des revendications 2 à 11,
dans lequel la première pièce auxiliaire de fabrication (2) présente, dans la zone du logement (8) et/ou au voisinage de l'élément d'encliquetage (10), au moins un élément de positionnement (30) faisant saillie dans l'état monté en direction du châssis (120), lequel est conçu pour établir un contact ponctuel et/ou linéaire avec le châssis (120), afin de maintenir une surface de contact de la première pièce auxiliaire de fabrication (2) espacée du châssis (120).

13. Auxiliaire de fabrication (1) selon l'une quelconque des revendications 2 à 12,
dans lequel la première pièce auxiliaire de fabrication (2) présente au moins un élément de limitation (24) disposé au voisinage de l'élément d'encliquetage (10), lequel est conçu pour limiter le mouvement de l'élément d'encliquetage (10) perpendiculaire à la direction longitudinale (L).

14. Auxiliaire de fabrication (1) selon l'une quelconque des revendications précédentes,
dans lequel la première pièce auxiliaire de fabrication (2) présente un logement à encliquetage (18) et la deuxième pièce auxiliaire de fabrication (4) présente la partie d'accouplement (40) pour réaliser la liaison par encliquetage (6), dans lequel le logement à encliquetage (18) est conçu pour se déformer élastiquement de manière réversible, afin de recevoir la partie d'accouplement (40).

15. Auxiliaire de fabrication (1) selon la revendication 14,
dans lequel la première pièce auxiliaire de fabrication (2) présente une partie d'introduction (32) reliée au logement à encliquetage (18), et la partie d'accouplement (40) est conçue pour exercer une force sur la partie d'introduction (32), afin de déformer élastiquement le logement à encliquetage (18) de manière réversible.

16. Auxiliaire de fabrication (1) selon l'une quelconque des revendications précédentes,
dans lequel la première pièce de montage (12) peut être introduite dans une ouverture (142, 144) de la porte (140) et peut être amenée, par une rotation autour d'un axe de rotation (D), dans une position de verrouillage, dans laquelle la première pièce de montage (12) est en prise par coopération de formes avec l'ouverture (142, 144), et
dans lequel la deuxième pièce auxiliaire de fabrication (4) est déformable élastiquement, de telle sorte que la deuxième pièce de montage (14), au cas où la première pièce de montage (12) serait en prise avec l'ouverture (142, 144), peut être amenée en prise avec la porte (140) par réalisation d'une liaison par encliquetage.

17. Auxiliaire de fabrication (1) selon la revendication 16,
dans lequel la deuxième pièce auxiliaire de fabrication (4) présente au moins une partie de montage (50, 52) et est conçue pour se déformer élastiquement de manière réversible par application d'une force de libération (F2) sur la partie de montage (50, 52), afin de mettre la deuxième pièce de montage (14) et la porte (140) hors de prise.

18. Auxiliaire de fabrication (1) selon l'une quelconque des revendications 14 à 17,
dans lequel la deuxième pièce auxiliaire de fabrication (4) présente un élément de déviation (56) disposé, dans l'état monté, au-dessous de la partie d'accouplement (40), lequel est conçu pour recevoir des résidus de peinture tombant de la partie d'accouplement (40) et/ou du logement à encliquetage (18) et pour les détourner de la porte (140) et/ou du châssis (120).

19. Auxiliaire de fabrication (1) selon l'une quelconque des revendications précédentes,
dans lequel l'auxiliaire de fabrication (1) comprend un polymère thermoplastique, de préférence un polymère renforcé par des fibres de verre, de manière particulièrement préférée du polyamide 6 avec un pourcentage de fibres de verre de 20 % à 40 %, et/ou
dans lequel l'auxiliaire de fabrication (1) est produit par un processus de moulage par injection.

20. Procédé pour le blocage libérable d'une porte (140) sur un châssis (120) d'une carrosserie (100), en particulier d'une carrosserie de véhicule à moteur (100), avec les étapes :
- de fourniture d'un auxiliaire de fabrication (1) selon l'une quelconque des revendications 1 à 19,
- d'accouplement libérable d'une première pièce auxiliaire de fabrication (2) au châssis (120),
- d'accouplement libérable d'une deuxième pièce auxiliaire de fabrication (4) à la porte (140),
- de déplacement de la porte (140) en direction d'une position fermée de la porte (140), dans lequel la première pièce auxiliaire de fabrication (2) et la deuxième pièce auxiliaire de fabrication sont amenées en prise l'une avec l'autre de manière libérable au moyen d'une liaison par encliquetage (6a), et
- de blocage de la porte (140) de manière espacée du châssis (120) par l'auxiliaire de fabrication (1).

21. Procédé selon la revendication 20, comprenant en outre les étapes :
- de déplacement de la porte (140) en direction d'une position ouverte de la porte (140), dans lequel la première pièce auxiliaire de fabrication (2) et la deuxième pièce auxiliaire de fabrication sont amenées hors de prise,
- de déformation élastique de la première pièce auxiliaire de fabrication (2) par application d'une première force de libération (F1) pour le désaccouplement de la première pièce auxiliaire de fabrication (2) et du châssis (120), et
- de déformation élastique de la deuxième pièce auxiliaire de fabrication (4) par application d'une deuxième force de libération (F2) et ensuite d'amenée en rotation de la deuxième pièce auxiliaire de fabrication (4) autour d'un axe de rotation (D) pour désaccoupler la deuxième pièce auxiliaire de fabrication (4) et la porte (140).
